(19) Europäisches Patentamt European Patent Office Office européen des brevets

(11) **EP 4 722 405 A1**

(12) **EUROPEAN PATENT APPLICATION**
published in accordance with Art. 153(4) EPC

(43) Date of publication:
**08.04.2026 Bulletin 2026/15**

(21) Application number: **24815300.9**

(22) Date of filing: **21.05.2024**

(51) International Patent Classification (IPC):
*C23C 2/06* $^{(2006.01)}$    *C22C 18/04* $^{(2006.01)}$
*C22C 38/00* $^{(2006.01)}$    *C22C 38/04* $^{(2006.01)}$

(52) Cooperative Patent Classification (CPC):
**C22C 18/04; C22C 38/00; C22C 38/04; C23C 2/06**

(86) International application number:
**PCT/JP2024/018655**

(87) International publication number:
**WO 2024/247816 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.05.2023   JP 2023087179**

(71) Applicant: **NIPPON STEEL CORPORATION**
**Chiyoda-ku**
**Tokyo 100-8071 (JP)**

(72) Inventors:
• **MITSUNOBU, Takuya**
  **Tokyo 100-8071 (JP)**
• **HASEGAWA, Masumi**
  **Tokyo 100-8071 (JP)**
• **TAKEBAYASHI, Hiroshi**
  **Tokyo 100-8071 (JP)**

(74) Representative: **Vossius & Partner**
**Patentanwälte Rechtsanwälte mbB**
**Siebertstrasse 3**
**81675 München (DE)**

(54) **PLATED STEEL SHEET AND MEMBER FOR AUTOMOBILE**

(57)    A plated steel sheet including a plating layer disposed on at least part of a surface of a steel sheet, in which the plating layer contains Al: 10.00% to 30.00%, Mg: 1.00% to 15.00%, Fe: 0.01% to 15.00%, and a remainder including Zn and impurities, a surface of the plating layer is an uneven surface, in a cross section of the plating layer, a relationship between a length Lo of the plating layer in a longitudinal direction in an observation region of the cross section and a total length Lr of a contour line of the surface of the plating layer in the observation region satisfies the following expression (1), the plating layer includes one or both of a plurality of blocky binary eutectic structures or a plurality of blocky ternary eutectic structures, and at least some of the plurality of blocky binary eutectic structures or the plurality of blocky ternary eutectic structures are continuously present from the surface of the plating layer to a position at 1/2 of an average thickness of the plating layer is adopted. $(Lr - Lo)/Lo \times 100 \geq 2.0(\%) \dots (1)$

FIG. 3

EP 4 722 405 A1

**Description**

TECHNICAL FIELD

The present disclosure relates to a plated steel sheet and a member for a vehicle.
Priority is claimed on Japanese Patent Application No. 2023-087179, filed in Japan on May 26, 2023, the content of which is incorporated herein by reference.

BACKGROUND ART

A Zn-Al-Mg based hot-dip plated steel sheet, which has hot-dip galvanized steel sheet containing Al and Mg, has excellent corrosion resistance. Therefore, Zn-Al-Mg based hot-dip steel sheets are widely used as, for example, materials for structural components that require corrosion resistance, such as building materials. Recently, due to the high corrosion resistance of Zn-Al-Mg based hot-dip plating, there has been consideration for applying Zn-Al-Mg based hot-dip steel sheets, in which high-strength steel sheets like high-tensile steel is Zn-Al-Mg based hot-dip-plated, to members for a vehicle.
Patent Document 1 discloses a plated steel including a steel and a plating layer which includes a Zn-Al-Mg alloy layer positioned on the surface of the steel, in which the Zn-Al-Mg alloy layer includes a Zn phase, and the Zn phase contains a Mg-Sn intermetallic compound phase, the plating layer has a chemical composition containing in mass%, Zn: more than 65.0%, Al: more than 5.0% and less than 25.0%, Mg: more than 3.0% and less than 12.5%, Sn: 0.1% to 20.0%, and impurities, and satisfying following formulae 1 to 5.

$$\text{Formula 1: } Bi + In < Sn$$

$$\text{Formula 2: } Y + La + Ce \leq Ca$$

$$\text{Formula 3: } Si < Sn$$

$$\text{Formula 4: } O \leq Cr + Ti + Ni + Co + V + Nb + Cu + Mn < 0.25$$

$$\text{Formula 5: } O \leq Sr + Sb + Pb + B < 0.5$$

Patent Document 2 discloses a plated steel including a steel and a plating layer that is provided on a surface of the steel and includes Zn-Al-Mg alloy layer, wherein, in a cross-section of the Zn-Al-Mg alloy layer, an area fraction of $MgZn_2$ phase is from 45 to 75%, a total area fraction of $MgZn_2$ and Al phases is not less than 70%, and an area fraction of Zn-Al-$MgZn_2$ ternary eutectic structure is from 0 to 5%, and wherein the plating layer has a chemical composition consisting of, by mass: Zn: from more than 44.90% to less than 79.90%; Al: from more than 15% to less than 35%; Mg: from more than 5% to less than 20%; Ca: from 0.1% to less than 3.0%; and impurities, wherein, provided that an element group A consists of Y, La, and Ce, an element group B consists of Cr, Ti, Ni, Co, V, Nb, Cu, and Mn, an element group C consists of Sr, Sb, and Pb, and an element group D consists of Sn, Bi, and In: a total content of elements selected from the element group A ranges from 0% to 0.5%; a total content of Ca and elements selected from the element group A ranges from 0.1% to less than 3.0%; a total content of elements selected from the element group B ranges from 0% to 0.25%; a total content of elements selected from the element group C ranges from 0% to 0.5%; and a total content of elements selected from the element group D ranges from 0% to 20.00%.
In addition to end surface corrosion resistance which is the corrosion resistance of the cut end surface, plated steel sheets for vehicles require coating adhesion in a case in which the plated surface is painted. However, technologies to improve coating adhesion of plating layer including Zn-Al-Mg alloy layer had not been studied.

Citation List

Patent Documents

Patent Document 1: PCT International Publication No. WO2018/139619
Patent Document 2: PCT International Publication No. WO2018/139620

SUMMARY OF INVENTION

Technical Problem

The present disclosure has been made in view of the above circumstances, and an object thereof is to provide a plated steel sheet and a member for vehicle having excellent coating adhesion and end surface corrosion resistance.

Solution to problem

In order to achieve the above object, the present disclosure adopts the following configurations.

[1] A plated steel sheet, including: a steel sheet; and a plating layer disposed on at least part of a surface of the steel sheet, wherein

an average chemical composition of the plating layer contains, by mass%,
Al: 10.00% to 30.00%,
Mg: 1.00% to 15.00%,
Sn: 0.00% to 1.00%,
Si: 0.00% to 2.00%,
Ca: 0.00% to 2.00%,
Ni: 0.00% to 1.00%,
Fe: 0.01% to 15.00%,
Sb: 0.00% to 0.50%,
Pb: 0.00% to 0.50%,
Cu: 0.00% to 1.00%,
Ti: 0.00% to 1.00%,
Cr: 0.00% to 1.00%,
Nb: 0.00% to 1.00%,
Zr: 0.00% to 1.00%,
Mn: 0.00% to 1.00%,
Mo: 0.00% to 1.00%,
Ag: 0.00% to 1.00%,
Li: 0.00% to 1.00%,
Bi: 0.00% to 1.00%,
V: 0.00% to 1.00%,
Co: 0.00% to 1.00%,
In: 0.00% to 1.00%,
W: 0.00% to 1.00%,
P: 0.00% to 1.00%,
La: 0.00% to 0.50%,
Ce: 0.00% to 0.50%,
B: 0.00% to 0.50%,
Y: 0.00% to 0.50%,
Sr: 0.00% to 0.50%,
a total of Sb, Pb, Cu, Ti, Cr, Nb, Zr, Mn, Mo, Ag, Li, Bi, V, Co, P, In, W, La, Ce, B, Y, and Sr: 0.00% to 5.00%, and
a remainder: including Zn and impurities,
a surface of the plating layer is an uneven surface,
in a cross section of the plating layer, a relationship between a length Lo of the plating layer in a longitudinal direction in an observation region of the cross section and a total length Lr of a contour line of the surface of the plating layer in the observation region satisfies the following expression (1),
the plating layer includes one or both of a plurality of blocky binary eutectic structures or a plurality of blocky ternary eutectic structures, and
at least some of the plurality of blocky binary eutectic structures or the plurality of blocky ternary eutectic structures are continuously present from the surface of the plating layer to a position at 1/2 of an average thickness of the plating layer.

$$(Lr - Lo)/Lo \times 100 \geq 2.0(\%) \qquad (1)$$

[2] The plated steel sheet according to [1],

> wherein the plating layer contains an Fe-Al-based interface alloy layer which is in contact with the steel sheet, and at least some of the plurality of blocky binary eutectic structures or the plurality of blocky ternary eutectic structures are continuously present from the surface of the plating layer to the Fe-Al-based interface alloy layer.

[3] The plated steel sheet according to [1], wherein the number of points where at least some of the plurality of blocky binary eutectic structures or the plurality of blocky ternary eutectic structures are continuously present from the surface of the plating layer to a position at 1/2 of an average thickness of the plating layer is 1 to 15 per rectangular region having a long side of 500 $\mu$m and a short side of 150 $\mu$m on the surface of the plating layer.

[4] The plated steel sheet according to [1],

> wherein, instead of the expression (1), the following expression (2) is satisfied,
> the number of points where at least some of the plurality of blocky binary eutectic structures or the plurality of blocky ternary eutectic structures are continuously present from the surface of the plating layer to a position at 1/2 of an average thickness of the plating layer is 3 to 15 per rectangular region having a long side of 500 $\mu$m and a short side of 150 $\mu$m on the surface of the plating layer.

$$(Lr - Lo)/Lo \times 100 \geq 6.0(\%) \qquad (2)$$

[5] The plated steel sheet according to [1],

> wherein, instead of the expression (1), the following expression (3) is satisfied,
> the number of points where at least some of the plurality of blocky binary eutectic structures or the plurality of blocky ternary eutectic structures are continuously present from the surface of the plating layer to a position at 1/2 of an average thickness of the plating layer is 5 to 15 per rectangular region having a long side of 500 $\mu$m and a short side of 150 $\mu$m on the surface of the plating layer.

$$(Lr - Lo)/Lo \times 100 \geq 8.0(\%) \qquad (3)$$

[6] The plated steel sheet according to any one of [1], [3], [4], and [5],
wherein points where at least some of the plurality of blocky binary eutectic structures or the plurality of blocky ternary eutectic structures are continuously present from the surface of the plating layer to a position at 1/2 of an average thickness of the plating layer are present in recessed parts of the uneven surface of the plating layer.

[7] The plated steel sheet according to [2],
wherein points where at least some of the plurality of blocky binary eutectic structures or the plurality of blocky ternary eutectic structures are continuously present from the surface of the plating layer to the Fe-Al-based interface alloy layer are present in recessed parts of the uneven surface of the plating layer.

[8] The plated steel sheet according to [1], wherein in the average chemical composition of the plating layer, Al and Mg are Al: 10.00% to 25.00% and Mg: 4.50% to 15.00%.

[9] The plated steel sheet according to [1], wherein in the average chemical composition of the plating layer, Al and Mg are Al: 15.00% to 22.00% and Mg: 5.00% to 15.00%.

[10] The plated steel sheet according to any one of [1], [8], and [9],

> wherein in the average chemical composition of the plating layer, Sn is 0.05% to 0.50%, and
> an $Mg_2Sn$ phase detected by X-ray diffraction measurement is in the plating layer.

[11] The plated steel sheet according to [1], [8], or [9],

> wherein in the average chemical composition of the plating layer, one or both of La and Ce are contained, and a total amount of La and Ce is 0.05% to 0.50%.

[12] The adhesively joined structure according to [10],
wherein in the average chemical composition of the plating layer, one or both of La and Ce are contained, and a total amount of La and Ce is 0.05% to 0.50%.

[13] A member for a vehicle, including: a steel; a plating layer disposed on at least part of a surface of the steel; and a coating film disposed on a surface of the plating layer, wherein

an average chemical composition of the plating layer contains, by mass%,
Al: 10.00% to 30.00%,
Mg: 1.00% to 15.00%,
Sn: 0.00% to 1.00%,
Si: 0.00% to 2.00%,
Ca: 0.00% to 2.00%,
Ni: 0.00% to 1.00%,
Fe: 0.01% to 15.00%,
Sb: 0.00% to 0.50%,
Pb: 0.00% to 0.50%,
Cu: 0.00% to 1.00%,
Ti: 0.00% to 1.00%,
Cr: 0.00% to 1.00%,
Nb: 0.00% to 1.00%,
Zr: 0.00% to 1.00%,
Mn: 0.00% to 1.00%,
Mo: 0.00% to 1.00%,
Ag: 0.00% to 1.00%,
Li: 0.00% to 1.00%,
Bi: 0.00% to 1.00%,
V: 0.00% to 1.00%,
Co: 0.00% to 1.00%,
In: 0.00% to 1.00%,
W: 0.00% to 1.00%,
P: 0.00% to 1.00%,
La: 0.00% to 0.50%,
Ce: 0.00% to 0.50%,
B: 0.00% to 0.50%,
Y: 0.00% to 0.50%,
Sr: 0.00% to 0.50%,
a total of Sb, Pb, Cu, Ti, Cr, Nb, Zr, Mn, Mo, Ag, Li, Bi, V, Co, P, In, W, La, Ce, B, Y, and Sr: 0.00% to 5.00%, and
a remainder: including Zn and impurities,
a surface of the plating layer is an uneven surface,
in a cross section of the plating layer, a relationship between a length Lo of the plating layer in a longitudinal direction in an observation region of the cross section and a total length Lr of a contour line of the surface of the plating layer in the observation region satisfies the following expression (4),
the plating layer includes one or both of a plurality of blocky binary eutectic structures or a plurality of blocky ternary eutectic structures, and
at least some of the plurality of blocky binary eutectic structures or the plurality of blocky ternary eutectic structures are continuously present from the surface of the plating layer to a position at 1/2 of an average thickness of the plating layer.

$$(Lr - Lo)/Lo \times 100 \geq 2.0(\%) \qquad (4)$$

Advantageous Effects of Invention

According to the present disclosure, it is possible to provide a plated steel sheet and a member for a vehicle having excellent coating adhesion and end surface corrosion resistance.

BRIEF DESCRIPTION OF DRAWINGS

[FIG. 1] FIG. 1 is a cross-sectional schematic view of a plated steel sheet according to one embodiment of the present disclosure.
[FIG. 2] FIG. 2 is a schematic view showing an example of an observed visual field when a cross section of a plating layer is observed with a scanning electron microscope.

[FIG. 3] FIG. 3 is a schematic view showing an example of the observed visual field when the cross section of the plating layer is observed with a scanning electron microscope.

[FIG. 4] FIG. 4 is a schematic view showing an example of an observed visual field when a cross section of a plating layer of a plated steel in the related art is observed with a scanning electron microscope.

[FIG. 5] FIG. 5 is a flowchart of an example of a method of manufacturing a plated steel sheet according to one embodiment of the present disclosure.

DESCRIPTION OF EMBODIMENTS

The present inventors have investigated a method for improving the coating adhesion to a plating layer. The microstructure of a Zn-Al-Mg-based hot-dip plating layer containing Al, Mg, and Zn includes various phases or structures. For example, it is known that an Al phase and a $MgZn_2$ phase are crystallized in an initial solidification stage, and a binary eutectic structure or a ternary eutectic structure is crystallized in a later solidification stage. The present inventors conducted investigations, and found that the binary eutectic structure or the ternary eutectic structure has superior adhesion to the coating film compared to the Al phase and the $MgZn_2$ phase.

In a Zn-Al-Mg-based hot-dip plating layer in the related art, the binary eutectic structure or the ternary eutectic structure may be exposed to the surface of the plating layer. The binary eutectic structure or the ternary eutectic structure is often distributed in a surface layer of the plating layer, specifically, in a range from the surface of the plating layer to a depth position of 1/4 to 1/3 of the average thickness of the plating layer. In the related art, it was considered that the coating adhesion is improved by the eutectic structures exposed to the surface of the plating layer. However, in a case where a vehicle member is manufactured from a plated steel sheet, it is necessary to perform various kinds of processing on the plated steel sheet in order to obtain a vehicle member having a desired shape. In this case, the plating layer subjected to such processing may have fine cracks on the surface thereof due to strain during the processing. It was found that when such cracks are generated around an eutectic structure exposed to the surface of the plating layer, the eutectic structure surrounded by the cracks may fall off from the plating layer, so-called powdering or flaking may occur, and the coating adhesion may not be improved.

Particularly, since the Zn-Al-Mg-based hot-dip plating layer is hard compared to a Zn-based plating layer in the related art, a relatively large number of cracks may be generated, the frequency of falling of the eutectic structure from the plating layer increases, and there is concern about a decrease in coating adhesion.

In addition, it was expected that the coating adhesion could be improved when the surface of the plating layer was an uneven surface rather than a flat surface.

Thus, the present inventors conducted investigations and have found that, by controlling the atmosphere in a duration from the time when a hot-dip plating bath is pulled up to the start of cooling after the hot-dip plating bath is adhered to a steel sheet by a hot-dip plating method, adjusting the cooling rate during the cooling, and further selecting a suitable cooling gas, a binary eutectic structure or a ternary eutectic structure is continuously present up to a position deeper than the surface layer of the plating layer, specifically, at least to a position at a depth of 1/2 the average thickness of the plating layer from the surface of the plating layer, so that even in a case where cracks are generated, the eutectic structure does not fall off from the plating layer, thereby preventing a decrease in coating adhesion. Moreover, it was found that the surface of the plating layer is formed into an uneven surface by controlling the atmosphere, adjusting the cooling rate, and selecting a suitable cooling gas, and the coating adhesion can be further improved.

Hereinafter, a plated steel sheet and a exterior material for a vehicle according to the present disclosure, which is an embodiment of the present disclosure, will be described.

The plated steel sheet according to the present embodiment includes a steel sheet and a plating layer disposed on at least part of a surface of the steel sheet, in which the average chemical composition of the plating layer contains, by mass%, Al: 10.00% to 30.00%, Mg: 1.00% to 15.00%, Sn: 0.00% to 1.00%, Si: 0.00% to 2.00%, Ca: 0.00% to 2.00%, Ni: 0.00% to 1.00%, Fe: 0.01% to 15.00%, Sb: 0.00% to 0.50%, Pb: 0.00% to 0.50%, Cu: 0.00% to 1.00%, Ti: 0.00% to 1.00%, Cr: 0.00% to 1.00%, Nb: 0.00% to 1.00%, Zr: 0.00% to 1.00%, Mn: 0.00% to 1.00%, Mo: 0.00% to 1.00%, Ag: 0.00% to 1.00%, Li: 0.00% to 1.00%, Bi: 0.00% to 1.00%, V: 0.00% to 1.00%, Co: 0.00% to 1.00%, In: 0.00% to 1.00%, W: 0.00% to 1.00%, P: 0.00% to 1.00%, La: 0.00% to 0.50%, Ce: 0.00% to 0.50%, B: 0.00% to 0.50%, Y: 0.00% to 0.50%, Sr: 0.00% to 0.50%, a total of Sb, Pb, Cu, Ti, Cr, Nb, Zr, Mn, Mo, Ag, Li, Bi, V, Co, P, In, W, La, Ce, B, Y, and Sr: 0.00% to 5.00%, and a remainder: including Zn and impurities, and in which the surface of the plating layer is an uneven surface, and in a cross section of the plating layer, the relationship between a length Lo of the plating layer in the longitudinal direction in an observation region of the cross section and a total length **Lr** of a contour line of the surface of the plating layer in the observation region satisfies the following expression (1), and the plating layer includes one or both of a plurality of blocky binary eutectic structures and a plurality of blocky ternary eutectic structures, and at least some of the plurality of blocky binary eutectic structures or the plurality of blocky binary eutectic structures are continuously present from the surface of the plating layer to a position at 1/2 of the average thickness of the plating layer.

$$(\text{Lr - Lo})/\text{Lo} \times 100 \geq 2.0(\%) \qquad (1)$$

In addition, in the plated steel sheet according to the present embodiment, it is preferable that the plating layer contains an Fe-Al-based interface alloy layer which is in contact with the steel sheet, and at least some of the plurality of blocky binary eutectic structures or the plurality of blocky ternary eutectic structures are continuously present from the surface of the plating layer to the Fe-Al-based interface alloy layer.

In addition, in the plated steel sheet according to the present embodiment, it is preferable that points where at least some of the plurality of blocky binary eutectic structures or the plurality of blocky ternary eutectic structures are continuously present from the surface of the plating layer to a position at 1/2 of the average thickness of the plating layer are present in recessed parts of the uneven surface of the plating layer.

Moreover, in the plated steel sheet according to the present embodiment, it is preferable that points where at least some of the plurality of blocky binary eutectic structures or the plurality of blocky ternary eutectic structures are continuously present from the surface of the plating layer to the Fe-Al-based interface alloy layer are present in recessed parts of the uneven surface of the plating layer.

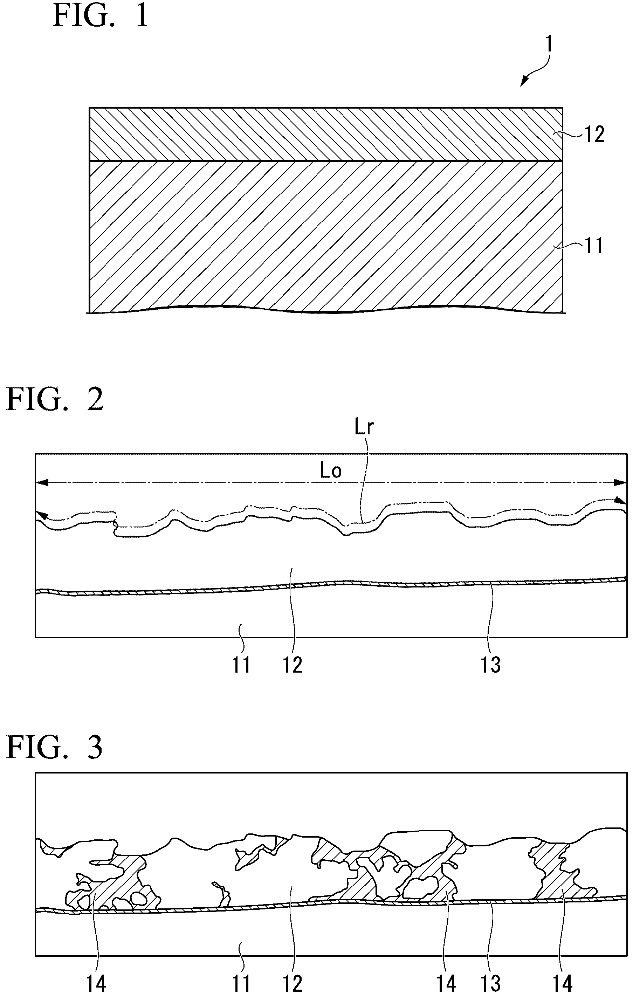

FIG. 1 shows a cross-sectional schematic view of the plated steel sheet 1. FIG. 1 is a schematic view illustrating the positional relationship between a steel sheet **11** and a plating layer 12. In FIG. 1, an uneven surface of the surface of the plating layer 12 is not shown.

As shown in FIG. 1, the plated steel sheet 1 according to the present embodiment has the steel sheet 11. The shape of the steel sheet 11 is not particularly limited. The steel sheet 11 may be, for example, a basis steel sheet formed into steel pipes, civil engineering and construction materials (fence culverts, corrugated pipes, drainage ditch covers, flying sand prevention plates, bolts, wire mesh, guardrails, watertight walls, and so on), home appliance components (outdoor unit housing of air conditioners, and so on), vehicle members (suspension members, exterior members, interior members, structural members, and so on), and so forth. The forming process is, for example, various plastic forming techniques such as pressing, roll forming, bending, and so on.

The material of the steel sheet 11 is not limited. The steel sheet 11 can be various steel sheets, such as general steel, Al-killed steel, very low carbon steel, high carbon steel, various high tensile steels, and some high-alloy steels (such as steels containing strengthening elements such as Ni and Cr). The steel sheets 11 may be hot-rolled steel sheets, hot-rolled steel strips, cold-rolled steel sheets, and cold-rolled steel strips as described in JIS G 3302: 2010. The manufacturing method (hot rolling method, pickling method, cold rolling method, and so on) of the steel sheets and their specific manufacturing conditions are not limited.

In addition, the steel sheet 11 constituting the plated steel sheet 1 according to the present embodiment may be a high-tensile strength steel sheet for a member for a vehicle.

The plated steel sheet 1 according to the present embodiment has the plating layer 12 disposed on at least part of the surface of the steel sheet 11. In FIG. 1, the plating layer 12 is formed on one side of the steel sheet 11, but the plating layer 12 may be formed on both surfaces of the steel sheet 11. The plating layer 12 is preferably a plating film manufactured by so-called hot-dip plating treatment.

The plating layer 12 is mainly composed of a Zn-Al-Mg alloy layer due to a chemical composition to be described below. In addition, the plating layer 12 of the plated steel sheet 1 according to the present embodiment may include an Fe-Al-based interface alloy layer containing Fe and Al as main components between the steel sheet 11 and the Zn-Al-Mg alloy layer. That is, the plating layer 12 may have a single-layer structure of the Zn-Al-Mg alloy layer or may have a laminated structure including the Zn-Al-Mg alloy layer and the Fe-Al-based interface alloy layer.

Hereinafter, the chemical composition of the plating layer will be described. The expression of "%" for the content of each element of the chemical composition means "% by mass". The content of an element in the chemical composition may be denoted as an element concentration (for example, a Zn concentration, a Mg concentration, or the like).

The term "coating adhesion" indicates a property in which a coating film is not easily peeled off in a case where the coating film is provided on the surface of the plating layer or in a case where a chemical conversion film and the coating film are provided on the film portion.

The term "planar corrosion resistance" refers to the property of a plating layer (specifically, the Zn-Al-Mg alloy layer) itself not being easily corroded.

Moreover, the term "end surface corrosion resistance" indicates the property of suppressing corrosion of a steel sheet at an exposed portion of the steel sheet (for example, a cut end surface of a plated steel sheet).

The plating layer according to the present embodiment contains Zn and other alloying elements. The chemical composition of the plating layer will be described in detail below. An element for which the lower limit of the concentration is described to be 0.00% is an optional element that is not essential for solving the problem of the plated steel sheet according to the present embodiment but is permitted to be contained in the plating layer for the purpose of improving characteristics, or the like.

<Al: 10.00% to 30.00%>

Al contributes to the improvement of planar corrosion resistance and the workability. Therefore, the Al concentration is set to 10.00% or more. On the other hand, in a case where Al is excessive, the Mg concentration and the Zn concentration relatively decrease, and the end surface corrosion resistance deteriorates. Therefore, the Al concentration is set to 30.00% or less. The Al concentration may be set to 10.00% to 25.00% or 15.00% to 22.00%. The Al concentration may be set to 11.00% or more, 13.00% or more, or 16.00% or more. The Al concentration may be set to 28.00% or less, 24.00% or less, or 20.00% or less.

<Mg: 1.00% to 15.00%>

Mg is an essential element for securing the planar corrosion resistance. In addition, Mg is also necessary to crystallize a binary eutectic structure, a ternary eutectic structure, an $Mg_2Sn$ phase, and the like. Therefore, the Mg concentration is set to 1.00% or more. On the other hand, in a case where the Mg concentration is excessive, the workability, particularly the powdering property, may deteriorate, and further, the planar corrosion resistance may deteriorate. Therefore, the Mg concentration is set to 15.00% or less. The Mg concentration may be set to 4.50% to 15.00% or 5.00% to 15.00%. The Mg concentration may be set to 2.00% or more, 3.00% or more, or 4.00% or more. The Mg concentration may be set to 13.00% or less, 10.00% or less, or 8.00% or less.

Since the elements to be described below are all optionally added elements except for Fe and Zn, the lower limits thereof are set to 0% or more.

<Sn: 0.00% to 1.00%>

The Sn concentration may be 0%. However, Sn is an element that forms an intermetallic compound with Mg and improves the planar corrosion resistance of the plating layer. Therefore, the Sn concentration may be set to 0.05% or more, 0.10% or more, or 0.20% or more. However, when the Sn concentration is excessive, the planar corrosion resistance deteriorates. Therefore, the Sn concentration is set to 1.00% or less. The Sn concentration may be set to 0.80% or less, 0.60% or less, 0.50% or less, 0.20% or less, or 0.06% or less.

<Si: 0.00% to 2.00%>

The Si concentration may be 0.00%. However, Si contributes to the improvement of planar corrosion resistance. In addition, Si is an element necessary for the crystallization of the $Mg_2Si$ phase. Therefore, the Si concentration may be set to more than 0.00%, 0.01% or more, 0.05% or more, or 0.10% or more. On the other hand, when the Si concentration is excessive, the planar corrosion resistance deteriorates. Therefore, the Si concentration is set to 2.00% or less. The Si concentration may be set to 1.80% or less, 1.50% or less, 1.20% or less, or 1.00% or less.

<Ca: 0.00% to 2.00%>

The Ca concentration may be 0%. However, Ca is an element that can adjust the optimal amount of Mg eluted for imparting the planar corrosion resistance. Therefore, the Ca concentration may be 0.01% or more or 0.02% or more. On the other hand, when the Ca concentration is excessive, the planar corrosion resistance and the workability deteriorate. Therefore, the Ca concentration is set to 2.00% or less. The Ca concentration may be 1.00% or less, 0.50% or less, 0.10% or less, or 0.05% or less.

<Ni: 0.00% to 1.00%>

The Ni concentration may be 0.00%. However, Ni contributes to the improvement of end surface corrosion resistance. Therefore, the Ni concentration may be set to 0.001% or more. On the other hand, when the Ni concentration is excessive, the planar corrosion resistance deteriorates. Therefore, the Ni concentration is set to 1.00% or less. The Ni concentration may be set to 0.50% or less, 0.10% or less, or 0.01% or less.

<Fe: 0.01% to 15.00%>

The Fe concentration may be 0%, but Fe may be mixed into the plating layer from a base steel sheet. Therefore, Fe may be contained in the plating layer in an amount of 0.01% or more. It was checked that, when the Fe concentration is 15.00% or less, there is no adverse influence on the performance of the plating layer. The Fe concentration may be set to, for example, 0.01% or more, 0.10% or more, or 0.50% or more. The Fe concentration is set to 15.00% or less. The Fe concentration may be set to 10.00% or less, 5.00% or less, 2.00% or less, or 1.00% or less.

<Sb, Pb: each 0.00% to 0.50%>

The concentrations of Sb and Pb may be 0.00%. However, Sb and Pb contribute to the improvement of end surface corrosion resistance. Therefore, the concentration of each of Sb and Pb may be set to 0.01% or more, 0.03% or more, or 0.05% or more. On the other hand, when the Sb or Pb concentration is excessive, the planar corrosion resistance deteriorates. Therefore, the concentration of each of Sb and Pb is set to 0.50% or less. The concentration of each of Sb and Pb may be set to 0.40% or less, 0.20% or less, or 0.10% or less.

<Cu, Ti, Cr, Nb, Zr, Mn, Mo, Ag, and Li: each 0.00% to 1.00%>

The concentration of each of Cu, Ti, Cr, Nb, Zr, Mn, Mo, Ag, and Li may be 0%. These contribute to the improvement of end surface corrosion resistance. Therefore, the concentration of each of these elements may be set to 0.01% or more. On the other hand, in a case where the concentration of each of these elements is excessive, the planar corrosion resistance deteriorates. Therefore, the concentration of each of these elements is set to 1.00% or less. The concentration of each of these elements may be set to 0.50% or less, 0.10% or less, 0.05% or less, or 0.03% or less.

<Bi, V, Co, In, and W: each 0.00% to 1.00%>

The concentration of each of Bi, V, Co, In, and W may be 0%. Each of these elements contributes to the improvement of end surface corrosion resistance. Therefore, the concentration of each of these elements may be set to 0.001 or more or 0.01% or more. On the other hand, in a case where the concentrations of these elements are excessive, the planar corrosion resistance deteriorates. Therefore, the concentration of each of Bi, V, Co, In, and W is set to 1.00% or less. The concentration of each of these elements may be set to 0.50% or less, 0.10% or less, 0.02% or less, or 0.01% or less.

<P: 0.00% to 1.00%>

The P concentration may be 0%. P contributes to the improvement of end surface corrosion resistance. Therefore, the P concentration may be set to 0.005% or more or 0.01% or more. On the other hand, when the P concentration is excessive, the planar corrosion resistance deteriorates. Therefore, the P concentration is set to 1.00% or less. The P concentration may be set to 0.05% or less, 0.03% or less, or 0.01% or less.

<B, Y, and Sr: each 0.00% to 0.50%>

The concentration of each of B, Y, and Sr may be 0.00%. B, Y, and Sr contribute to the improvement of end surface corrosion resistance. Therefore, the concentration of each of these elements may be set to 0.001 % or more or 0.01% or more. On the other hand, when the concentrations of B, Y, and Sr are excessive, the planar corrosion resistance deteriorates. Therefore, the concentration of each of these elements is set to 0.50% or less. The concentration of each of these elements may be set to 0.10% or less, 0.02% or less, or 0.01% or less.

<La and Ce: each 0.00% to 0.50%>

The concentrations of La and Ce may be 0%. La and Ce contribute to the improvement of end surface corrosion resistance. Therefore, the concentration of each of these elements may be set to 0.01% or more. On the other hand, when the concentrations of La and Ce are excessive, the planar corrosion resistance deteriorates. Therefore, the concentration of each of these elements is set to 0.50% or less. The concentration of each of these elements may be set to 0.10% or less, 0.05% or less, or 0.02% or less. In addition, the total amount of La and Ce may be set to 0.05% to 0.50%.

<Total of Sb, Pb, Cu, Ti, Cr, Nb, Zr, Mn, Mo, Ag, Li, Bi, V, Co, In, W, P, La, Ce, B, Y, and Sr: 0.00% to 5.00%>

The total of these elements is set to 0% to 5%. When the total exceeds 5%, the planar corrosion resistance or the end surface corrosion resistance may decrease.

<Remainder: Zn and impurities>

The remainder of the components of the plating layer according to the present embodiment includes Zn and impurities. Zn is an element that provides planar corrosion resistance and end surface corrosion resistance to the plating layer. Impurities refer to components that are contained in raw materials or components that are mixed in during the manufacturing process and components that are not intentionally contained. For example, in the plating layer, there are cases where a small amount of components other than Fe are mixed in as impurities due to mutual atomic diffusion between the base steel sheet and a plating bath.

In addition, in the plating layer according to the present embodiment, the total of Al, Mg, and Zn is preferably 74.00% or more, and may be 80.00% or more, 90.00% or more, 95.00% or more, or 98.00% or more.

The chemical composition of the plating layer is measured using the following method. First, an acid solution is obtained by exfoliating and dissolving the plating layer using an acid containing an inhibitor that suppresses the corrosion of the steel sheet. Next, the obtained acid solution is subjected to ICP analysis. This makes it possible to obtain the chemical composition of the plating layer. The type of acid is not particularly limited as long as the acid is capable of dissolving the plating layer. The chemical composition that is measured by the above-described method is the average chemical composition of the entire plating layer.

<Surface of plating layer>

The surface of the plating layer of the present embodiment is an uneven surface. The roughness of the uneven surface is represented by a relational expression between Lo and Lr as shown in the following expression (1). That is, $(Lr - Lo)/Lo \times 100$ needs to be 2.0% or more. When $(Lr - Lo)/Lo \times 100$ is less than 2.0 (%), the roughness of the uneven surface is small, and the coating adhesion cannot be improved. $(Lr - Lo)/Lo \times 100$ more preferably satisfies the following expression (2), and still more preferably satisfies the following expression (3). Although an upper limit of $(Lr - Lo)/Lo \times 100$ is not particularly necessary, when it is too large, the surface smoothness of the plating layer may decrease and the surface flatness of the coating film may decrease, and thus, $(Lr - Lo)/Lo \times 100$ may be 40(%) or less, 20(%) or less, or 12(%) or less.

$$(Lr - Lo)/Lo \times 100 \geq 2.0(\%) \qquad (1)$$

$$(Lr - Lo)/Lo \times 100 \geq 6.0(\%) \qquad (2)$$

$$(Lr - Lo)/Lo \times 100 \geq 8.0(\%) \qquad (3)$$

In the cross section of the plating layer, the length Lo in Expressions (1) to (3) is the length of the plating layer in the longitudinal direction in the observation region of the cross section, and Lr is the total length of the contour line of the surface of the plating layer in the observation region. The observation region is an observed visual field when the cross section of the plating layer is observed with a scanning electron microscope, the length of the plating layer in the longitudinal direction that is included in the observed visual field is Lo, and the total length of the contour line of the surface of the plating layer corresponding to the length Lo of the plating layer in the longitudinal direction is Lr. In the measurement of Lo and Lr, it is desirable to set the observed visual field when observed with a scanning electron microscope such that the length Lo of the plating layer in the longitudinal direction is 500 μm. In addition, a plurality of observed visual fields may be combined to synthesize an observed visual field in which the length Lo of the plating layer in the longitudinal direction is 500 μm.

The position where the observed visual field is disposed is spaced apart from an end portion of the plated steel sheet by 5 mm or more. In a case where a welded part is provided in the plated steel sheet, the observed visual field is spaced apart from weld beads by 1 mm or more. Moreover, in a case where the plated steel sheet actually has a bent portion, the observed visual field is spaced apart from the bent portion by 2 mm or more. Accordingly, the influence of cutting, welding, and bending of the plated steel sheet on the surface properties of the plating layer is excluded from the measurement results.

The observed visual field is preferably disposed on a flat point. However, the plated steel sheet may not have a flat point. For example, in a case where the plated steel sheet is used as an exterior component of a vehicle, the plated steel sheet may have an overall loosely-curved shape and may not have a flat point. In this case, it is preferable that the observed visual field be disposed in a region having a radius of curvature of 5 mm or more.

The number of observed visual fields is set to 5. First, $(Lr - Lo)/Lo \times 100$ is calculated in each of the five observed visual fields, and then an arithmetic average value of these values is obtained. This arithmetic average value is regarded as $(Lr - Lo)/Lo \times 100$ of the plated steel sheet.

FIG. 2 is a schematic view showing an example of the observed visual field when observed with a scanning electron microscope. FIG. 2 shows the relationship between Lo and Lr. In FIG. 2, reference numeral 11 denotes a steel sheet, reference numeral 12 denotes a plating layer, and reference numeral 13 denotes an interface alloy layer. Both the double-headed arrow lines of reference signs Lo and Lr schematically represent the lengths of Lo and Lr. In addition, in FIG. 2, the uneven surface of the surface of the plating layer is schematically represented.

<Structure of plating layer>

The plating layer of the present embodiment includes one or both of a plurality of blocky binary eutectic structures and a plurality of blocky ternary eutectic structures. The binary eutectic structure is a eutectic structure of an $\eta$-Zn phase and an Al-Zn phase, and the ternary eutectic structure is a eutectic structure of an Al phase, a Zn phase, and an $MgZn_2$ phase. These eutectic structures may be structures in which each phase constituting the eutectic structures is aggregated in a lamellar form. That is, the binary eutectic structure may have a lamellar structure in which a lamellar $\eta$-Zn phase and a lamellar Al-Zn phase overlap each other. The ternary eutectic structure may have a lamellar structure in which a lamellar Al phase, a lamellar Zn phase, and a lamellar $MgZn_2$ phase overlap each other.

In addition to these eutectic structures, the plating layer contains a blocky Al phase, an Al-Zn phase, a Zn phase, a $MgZn_2$ phase, and the like. In addition, an eutectoid structure including a lamellar Zn phase and a lamellar Al phase may be formed in the plating layer. This eutectoid structure has a lamellar structure, but does not correspond to a binary eutectic structure or a ternary eutectic structure.

In the plating layer of the present embodiment, at least some of a plurality of blocky binary eutectic structures or ternary eutectic structures are continuously present from the surface of the plating layer to a position at 1/2 of the average thickness of the plating layer. On the surface of the plating layer, at least some of the blocky binary eutectic structures or the blocky ternary eutectic structures are exposed to the surface of the plating layer. The binary eutectic structure or the ternary eutectic structure has excellent adhesion to the coating film compared to other phases such as the Al phase and the Al-Zn phase. Therefore, the adhesion of the entire plating layer to the coating film is improved by exposing the binary eutectic structure or the ternary eutectic structure to the surface of the plating layer.

In addition, in a case where cracks are generated in the plating layer during the processing of the plated steel sheet, the generated cracks often propagate along a boundary surface between the binary eutectic structure or the ternary eutectic structure and the other phases or structures. In the present embodiment, at least some of the binary eutectic structures or ternary eutectic structures are continuously present up to a position at 1/2 of the average thickness of the plating layer. Therefore, cracks generated due to bending propagate from the surface of the plating layer toward the steel sheet side, and are less likely to propagate in a direction parallel to the surface of the plating layer. Therefore, even in a case where cracks are generated, the eutectic structure does not easily fall off from the plating layer, and powdering or flaking is suppressed. Accordingly, even in a case where the plating layer is processed, the coating adhesion of the plating layer does not decrease.

The plating layer of the present embodiment is more preferably such that at least some of the plurality of blocky binary eutectic structures or ternary eutectic structures are continuously present from the surface of the plating layer to the Fe-Al-based interface alloy layer. Accordingly, the occurrence of powdering or flaking is further suppressed, and the coating adhesion of the plating layer is further improved.

FIG. 3 is an enlarged schematic view of an example of the plating layer of the present embodiment. The presence state of binary eutectic structures or ternary eutectic structures is shown. In FIG. 3, the uneven surface of the plating layer 12 is schematically represented, and the presence state of binary eutectic structures or ternary eutectic structures is shown. The hatched portions in the figure are the binary eutectic structures or ternary eutectic structures. In FIG. 3, reference numeral 11 denotes a steel sheet, reference numeral 12 denotes a plating layer, reference numeral 13 denotes an interface alloy layer, and reference numeral 14 denotes binary eutectic structures or ternary eutectic structures.

As shown in FIG. 3, it can be seen that the binary eutectic structures or ternary eutectic structures 14 are continuous from the surface of the plating layer 12 toward the steel sheet 11 side. It can be seen that the binary eutectic structures or ternary eutectic structures 14 are continuously present up to the Fe-Al-based interface alloy layer 13 on the steel sheet 11 side of the plating layer 12. FIG. 3 shows an example in which most of the binary eutectic structures or ternary eutectic structures 14 are continuous up to the Fe-Al-based interface alloy layer 13 on the steel sheet 11 side of the plating layer 12. However, the present embodiment is not limited thereto, and may include the binary eutectic structures or ternary eutectic structures 14 continuous up to the 1/2 position of the plating layer 12.

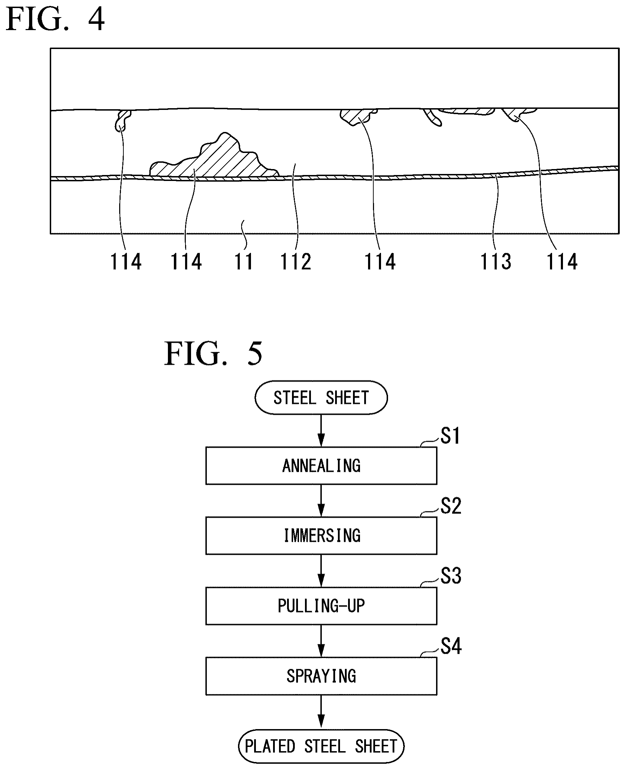

For reference, a cross-sectional schematic view of a plating layer in the related art is shown in FIG. 4. In a plating layer 112 in the related art, the surface of the plating layer is flat, and binary eutectic structures or ternary eutectic structures 114 are distributed in the vicinity of an interface alloy layer 113 of the plating layer 112 or near the surface of the plating layer, and no binary eutectic structure or ternary eutectic structure 114 continuous up to the 1/2 position of the plating layer 112 is found.

In addition, the surface of the plating layer 12 of the present embodiment is an uneven surface as illustrated in FIGS. 2 and 3, and the binary eutectic structures or ternary eutectic structures 14 continuously present up to the 1/2 depth of the average thickness of the plating layer 12 are present in many recessed parts of the uneven surface as shown in FIG. 3. This is because, as will be described below, the binary eutectic structures or the ternary eutectic structures 14 are crystallized in the latter half of the solidification process of the plating layer. As the binary eutectic structures or the ternary eutectic structures 14 are present in concentration in the recessed parts, the coating adhesion can be enhanced in combination with the shape effect of the uneven surface.

In addition, in the present embodiment, the binary eutectic structures or the ternary eutectic structures continuously present from the surface of the plating layer to the Fe-Al-based interface alloy layer may be present in recessed parts of the uneven surface in a large amount.

As described below in the description of the manufacturing method, the binary eutectic structures or the ternary eutectic structures begin to crystallize after the Al phase or the Al-Zn phase is crystallized. It is considered that the crystallization of these eutectic structures begins from the nucleation on the region of the plating layer on the steel sheet side, more specifically, on the surface of the Fe-Al-based interface alloy layer as a base point. It is also considered that the crystallization of the eutectic structures progresses toward the surface of the plating layer. Therefore, it is considered that many of the binary eutectic structures or the ternary eutectic structures according to the present embodiment are continuously present from the surface of the plating layer to the Fe-Al-based interface alloy layer.

However, in a case where the internal structure of the plating layer is observed at an optional cross section, all of the binary eutectic structures or the ternary eutectic structures are not always observed in a continuous form from the surface of the plating layer to the Fe-Al-based interface alloy layer. This is because the individual shapes of the blocky binary eutectic structures or ternary eutectic structures are indefinite shapes, and thus the forms of the binary eutectic structures may appear differently depending on the position of the cross section.

According to the present inventors' investigations, it is presumed that in a case where at least some of the plurality of blocky binary eutectic structures or ternary eutectic structures are continuously present from the surface of the plating layer to a position at 1/2 of the average thickness of the plating layer at least in the cross section of the plating layer, there is a high probability that most of the binary eutectic structures or the ternary eutectic structures are present in a continuous form from the surface of the plating layer to the Fe-Al-based interface alloy layer, which improves the coating adhesion.

In the present embodiment, the number of points where the binary eutectic structures or the ternary eutectic structures are continuously present from the surface of the plating layer to a position at 1/2 of the average thickness of the plating layer is preferably 1 to 15 points per rectangular region of 500 $\mu$m in a long side and 150 $\mu$m in a short side on the surface of the plating layer. When the number of points is less than one point, the coating adhesion is insufficient, which is not preferable. In addition, in a case where the above expression (2) is satisfied, the number of points is preferably 3 to 15. Moreover, in a case where the above expression (3) is satisfied, the number of points is preferably 5 to 15.

The presence of the binary eutectic structures or the ternary eutectic structures is checked as follows.

On the surface of the plating layer, a rectangular region having a long side of 500 $\mu$m and a short side of 150 $\mu$m is set. The position where the region is disposed is determined by the same method as the above-described observed visual field for evaluating the roughness of the uneven surface of the plating layer.

Within the region, the number and positions of binary eutectic structures or ternary eutectic structures exposed to the surface of the plating layer are checked. Next, the surface of the plating layer including the region is sequentially ground to the 1/4-position depth, 1/2-position depth, 3/4-position depth, and 9/10-position depth of the average thickness of the plating layer, and is further mirror-polished to be an observed section. Then, in each of the 1/4-position depth, the 1/2-position depth, the 3/4-position depth, and the 9/10-position depth, the number and positions of binary eutectic structures or ternary eutectic structures in the observed section at each depth are checked. In addition, the number of the binary eutectic structures or the ternary eutectic structures appearing at the same position is counted on all of the surface, the 1/4-position depth, and the 1/2-position depth of the plating layer. Whether or not the structures appear at the same position can be regarded as appearing at the same position when the eutectic structures appear in the projected range of a radius of 15 $\mu$m from the centroid of the eutectic structures on the surface of the plating layer. The binary eutectic structures or the ternary eutectic structures appearing at the same position are determined to be continuously present from the surface of the plating layer to a position at 1/2 of the average thickness of the plating layer. The method for the grinding is not particularly limited, and examples thereof include precision mechanical processing such as polishing and focused ion beam (FIB) processing.

Moreover, it is checked whether or not the binary eutectic structures or the ternary eutectic structures appearing at the same position are present on all of the surface, the 1/4-position depth, the 1/2-position depth, the 3/4-position depth, and the 9/10-position depth of the plating layer. As a result, the binary eutectic structures or the ternary eutectic structures appearing at the same position are specified to be continuously present from the surface of the plating layer to the Fe-Al-based interface alloy layer.

The average thickness of the plating layer is an average thickness of the plating layer in the rectangular region having a long side of 500 $\mu$m and a short side of 150 $\mu$m.

Then, a position at a height equivalent to the average thickness of the plating layer from the position of the interface between the steel sheet and the plating layer is estimated as the average surface position of the plating layer, and the 1/4-position depth, the 1/2-position depth, the 3/4-position depth, and the 9/10-position depth of the average thickness of the plating layer are determined with the estimated surface position as a reference.

In addition, in a case where the plating layer contains 0.05% to 0.5% of Sn, it is preferable that the $Mg_2Sn$ phase be contained in the plating layer. Since the amount of the $Mg_2Sn$ phase is small, the presence of the $Mg_2Sn$ phase is detected and checked by X-ray diffraction measurement using a $\theta$-$2\theta$ method. The end surface corrosion resistance of the plating layer is further improved by containing the $Mg_2Sn$ phase in the plating layer. The X-ray diffraction measurement in the detection of the $Mg_2Sn$ phase may be performed by a $\theta$-$2\theta$ measurement method.

The adhesion amount per one surface of the plating layer may be, for example, within a range of 20 to 200 $g/m^2$. When the adhesion amount per one surface is set to 20 $g/m^2$ or more, it is possible to further enhance the planar corrosion resistance and the end surface corrosion resistance of the plated steel sheet. On the other hand, when the adhesion amount per one surface is set to 200 $g/m^2$ or less, it is possible to further enhance the workability of the plated steel sheet.

In the plated steel sheet according to the present embodiment, a film may be formed on the plating layer. The film may be formed as one layer or as two or more layers. For example, the types of the film immediately above the plating layer are chromate film, phosphate film, and chromate-free film. These films can be formed by known methods such as chromate treatment, phosphate treatment, and chromate-free treatment, as described below.

The plated steel sheet according to the present embodiment described above has excellent coating adhesion and end surface corrosion resistance.

A member for a vehicle according to the present embodiment is configured by cutting the plated steel sheet according to the present embodiment into a predetermined flat shape and forming into a predetermined three-dimensional shape by press forming, and so on, and then forming a coating film. That is, the member for the vehicle according to the present embodiment includes a steel; a plating layer disposed on at least part of a surface of the steel; and a coating film disposed on a surface of the plating layer, in which the average chemical composition of the plating layer is as described above, a surface of the plating layer is an uneven surface, in a cross section of the plating layer, a relationship between a length Lo of the plating layer in a longitudinal direction in an observation region of the cross section and a total length Lr of a contour line of the surface of the plating layer in the observation region satisfies the following expression (4), the plating layer includes one or both of a plurality of blocky binary eutectic structures or a plurality of blocky ternary eutectic structures, and at least some of the plurality of blocky binary eutectic structures or the plurality of blocky ternary eutectic structures are continuously present from the surface of the plating layer to a position at 1/2 of the average thickness of the plating layer.

$$(Lr - Lo)/Lo \text{ x } 100 \geq 2.0(\%) \qquad (4)$$

The member for the vehicle according to the present embodiment described above has excellent coating adhesion and end surface corrosion resistance.

Next, a method of manufacturing the plated steel sheet according to the present embodiment will be described. Although it is not necessary to limit the manufacturing method to a specific method if it can manufacture the plated steel sheet according to the present embodiment, the plated steel sheet according to the present embodiment can be easily obtained by, for example, the manufacturing conditions described below.

The method of manufacturing a plated steel sheet according to the present embodiment includes annealing a steel sheet in a reducing atmosphere, immersing the steel sheet immediately after the annealing in a hot-dip plating bath, and then pulling up the steel sheet, thereby forming a plating layer on a surface of the steel sheet. Next, a cooling gas is sprayed the plating layer in a duration until the temperature of the plating layer reaches 260°C from the bath temperature to cool the plating layer. In this case, the oxygen concentration in the atmosphere on the bath surface of the plating bath and the oxygen concentration in the atmosphere from when the steel sheet is pulled up from the plating bath to when the cooling is completed are controlled in a range of 100 to 5,000 ppm. In addition, the average cooling rate in a duration until the temperature of the plating layer reaches 260°C from the bath temperature is set to 15°C/sec or more. Moreover, the cooling is performed by injecting the cooling gas, and a dew point of the cooling gas is set to 0°C or higher.

That is, the method of manufacturing a plated steel sheet according to the present embodiment includes, as shown in the flowchart of FIG. 5,

(S1) a step of annealing a steel sheet in a reducing atmosphere,
(S2) a step of immersing the steel sheet in a hot-dip plating bath,
(S3) a step of pulling up the steel sheet from the hot-dip plating bath, and
(S4) a step of spraying a cooling gas onto the steel sheet to which the hot-dip plating bath is attached.

(A) in the immersing S2 and the pulling-up S3, the oxygen concentration in the atmosphere on the bath surface of the hot-dip plating bath is set to a range of 100 to 5,000 ppm,
(B) in the spraying S4, a dew point of the cooling gas is set to 0°C or higher,
(C) in the spraying S4, an average cooling rate until the temperature of the plating layer reaches 260°C from the temperature of the hot-dip plating bath is set to 15°C/sec or more, and

(D) in the spraying S4, the oxygen concentration in the atmosphere from when the steel sheet is pulled up from the plating bath to when the cooling is completed is set in a range of 100 to 5,000 ppm. The plated steel sheet according to the present embodiment can be obtained by combining all of the conditions A, B, C, and D. Hereinafter, the details of the method of manufacturing will be described in order.

(S1 Annealing)

The annealing of the steel sheet to be a plated original sheet is performed in a reducing atmosphere. The reducing atmosphere and annealing conditions are not particularly limited. By this annealing, the oxide present on the surface of the steel sheet is removed as much as possible.

(S2 Immersing)

Next, the steel sheet immediately after the annealing is immersed in the hot-dip plating bath. The chemical composition of the plating bath may be appropriately adjusted such that the above-described chemical composition of the plating layer can be obtained. In addition, the temperature of the plating bath is also not particularly limited, and a temperature at which hot-dip plating can be carried out can be appropriately selected. For example, the plating bath temperature may be set to a value higher than the melting point of the plating bath by about 20°C or more.

(S3 Pulling-up)

Next, the steel sheet is pulled up from the plating bath. The adhesion amount of the plating layer can be controlled by controlling the pulling-up speed of the steel sheet. The adhesion amount of the plating layer may also be controlled by carrying out wiping on the steel sheet to which the plating layer is attached, as necessary. The adhesion amount of the plating layer is not particularly limited and can be set, for example, within the above-described range.

(S4 Spraying)

Next, the plating layer is cooled. The cooling is performed by spraying a cooling gas onto the steel sheet immediately after being pulled up from the hot-dip plating bath. The cooling by spraying the cooling gas is continuously performed until the temperature of the steel sheet reaches 260°C from the bath temperature. The cooling conditions lower than 260°C are not particularly limited, and the cooling by spraying the cooling gas may be performed subsequently, or natural cooling may be performed.

The oxygen concentration in the atmosphere on the bath surface of the plating bath and the oxygen concentration in the atmosphere from when the steel sheet is pulled up from the plating bath to when the cooling is completed are controlled in a range of 100 to 5,000 ppm. The oxygen concentration in these atmospheres is preferably in a range of 100 to 1,000 ppm. When the molten metal of the plating bath adhered to the steel sheet solidifies, an oxide film is formed on the outermost surface of the molten metal in the initial stage of the solidification, and the thickness of the oxide film is affected by the oxygen concentration in the atmosphere. When the oxide film has an appropriate thickness, the oxide film follows the shape change of the surface of the plating layer in the subsequent solidification process, and an uneven surface satisfying the above expression (1) is formed.

When the oxygen concentration in the atmosphere on the bath surface of the plating bath and in the atmosphere from when the steel sheet is pulled up from the plating bath to when the cooling is completed is less than 100 ppm, an oxide film of sufficient thickness is not formed, and it is difficult to form the surface of the plating layer into an uneven surface. In addition, when the oxygen concentration in the atmosphere exceeds 5,000 ppm, an oxide film having a relatively large film thickness and having a flat surface shape is formed in the initial stage of the solidification stage, and the oxide film does not follow the shape change of the surface of the plating layer in the solidification process, the surface of the plating layer after the solidification becomes a flat surface, and the above-described Expression (1) cannot be satisfied. In addition, when the oxygen concentration in the atmosphere exceeds 5,000 ppm, the oxide film is easily cracked, and it may be difficult to maintain the shape of the plating layer during the solidification.

The method for setting the oxygen concentration in the atmosphere on the bath surface of the plating bath to a range of 100 to 5,000 ppm is not particularly limited. For example, a cover that covers the surface of the plating bath may be provided, and a gas having an oxygen concentration of 100 to 5,000 ppm may be supplied into the cover. The type of gas supplied to the surface of the plating bath is not particularly limited as long as the oxygen concentration is in a range of 100 to 5,000 ppm, and may be a non-oxidizing gas such as nitrogen or an inert gas such as argon or a mixed gas thereof.

In order to set the oxygen concentration in the atmosphere from when the steel sheet is pulled up from the plating bath to when the cooling is completed to a range of 100 to 5,000 ppm, for example, the oxygen concentration of the cooling gas sprayed onto the steel sheet may be set to a range of 100 to 5,000 ppm. In a case where the cooling gas is air, the oxygen concentration of the cooling gas becomes excessive, and a suitable plating layer cannot be obtained.

In addition, by setting the dew point of the cooling gas to 0°C or higher, the function of maintaining the shape of the oxide film can be maintained. When the dew point of the cooling gas is lower than 0°C, a plating layer of which the surface shape satisfies the above expression (1) cannot be obtained. The type of cooling gas is not particularly limited as long as the oxygen concentration is in a range of 100 to 5,000 ppm, and may be a non-oxidizing gas such as nitrogen or an inert gas such as argon, or a mixed gas thereof.

In addition, the average cooling rate until the temperature of the plating layer reaches 260°C from the bath temperature is set to 15°C/sec or more. The upper limit of the average cooling rate is not particularly limited, but it may be, for example, 200°C/sec or less. By setting the average cooling rate to 15°C/sec or more, an Al primary phase (Al phase) or the Al-Zn phase is sufficiently crystallized in the initial stage of the solidification process. The average cooling rate until the temperature of the plating layer reaches 260°C from the bath temperature is a value calculated by the following expression. The cooling time is the time from when the steel sheet is pulled up from the plating bath to when the temperature of the plating layer decreases to 260°C.

$$\text{Average cooling rate} = (\text{bath temperature} - 260)/\text{cooling time}$$

As the Al primary phase (Al phase) or the Al-Zn phase is sufficiently crystallized in the initial stage of the solidification process, the amount of molten metal on the surface of the steel sheet decreases. When the binary eutectic structures or the ternary eutectic structures begin to crystallize with a decrease in temperature of the molten metal, these eutectic structures are formed so as to fill the surroundings of the already crystallized Al phase or Al-Zn phase. Since the crystallization of the eutectic structures begins when the remaining amount of molten metal is reduced, the binary eutectic structures or the ternary eutectic structures form recessed parts of the plating layer. In addition, the crystallization of the eutectic structures mainly begins from a region closer to the steel sheet of the plating layer, and more specifically, the crystallization begins from the nucleation on the surface of the Fe-Al-based interface alloy layer as a base point, and proceeds toward the surface of the plating layer. Accordingly, the binary eutectic structures or the ternary eutectic structures are continuously present from the steel sheet side of the plating layer toward the surface side.

After the plating layer is formed, various conversion treatments or coating treatments may be performed.

In the hot-dip plated steel according to the present embodiment, a film may be formed on the plating layer. The film may be formed as one layer or as two or more layers. For example, the types of the film immediately above the plating layer are chromate film, phosphate film, and chromate-free film. These films can be formed by known methods such as chromate treatment, phosphate treatment, and chromate-free treatment, as described below.

Chromate treatments include electrolytic chromate treatment, which forms a chromate film by electrolysis; reactive chromate treatment, which forms a film using reaction with the material and then washes away excess treatment solution; and applying-type chromate treatment, in which the treatment solution is applied to the coated material and dried without rinsing to form a film. Either treatment may be adopted.

Electrolytic chromate treatment using chromic acid, silica sol, resin (phosphoric acid, acrylic resin, vinylester resin, vinyl acetate acrylic emulsion, carboxylated styrene butadiene latex, diisopropanolamine modified epoxy resin, and so on), and hard silica are exemplary examples of the electrolytic chromate treatment.

Zinc phosphate treatment, calcium zinc phosphate treatment, and manganese phosphate treatment can be exemplified as the phosphate treatment.

Chromate-free treatment is particularly suitable, since it has no environmental impact. Chromate-free treatments include electrolytic chromate-free treatment, which forms a chromate-free film by electrolysis; reactive chromate-free treatment, which forms a film using reaction with the material and then washes away excess treatment solution; and applying-type chromate-free treatment, in which the treatment solution is applied to the coated material and dried without rinsing to form a film. Either treatment may be adopted.

Furthermore, one or two or more layers of organic resin film may be applied on top of the film immediately above the plating layer. The organic resin is not limited to a specific type, and polyester resin, polyurethane resin, epoxy resin, acrylic resin, polyolefin resin, or modified versions of these resins are exemplary examples of the organic resin. Here, the modified versions refers to a resin in which a reactive functional group in the structure of these resins is reacted with another compound (monomer, cross-linking agent, and so on) of which the structure contains a functional group which can react with that functional group.

As such organic resins, a mixture of one or more organic resins (unmodified) can be used, or a mixture of one or more organic resins obtained by modifying at least one other organic resin in the presence of at least one organic resin can be used. The organic resin film may also contain any coloring pigment or anti-corrosion pigment. Aqueous systems by dissolving or dispersing them in water may also be used.

As long as the requirements shown in the present disclosure are satisfied, the manufacturing method of the plated steel sheets is not limited to the above, and electroplating method, vapor deposition plating method, thermal spraying method, cold spraying method, and so on may be employed instead of the hot-dip plating method.

Examples

Hereinafter, the examples of the present invention will be described. However, the conditions in the examples are only one example of conditions employed to confirm the feasibility and effectiveness of the present invention. The present invention is not limited to this one example of conditions. Various conditions may be employed in the present invention as long as they do not depart from the gist of the present invention and achieve the purpose of the present invention.

As a plated original sheet, a cold-rolled steel sheet (0.05C-0.1Si-0.2Mn) having a sheet thickness of 1.6 mm was used. First, the steel sheet was annealed. The steel sheet after the annealing was immersed in various hot-dip plating baths and then pulled up to attach a plating layer to the surface of the steel sheet. Next, various plated steel sheets were manufactured by cooling the plating layer using a cooling gas until the plating layer reached 260°C from immediately after the plating bath was pulled up. The cooling gas was mainly composed of nitrogen gas. The oxygen concentration and the dew point of the cooling gas were as shown in Tables 2A and 2B.

During the steel sheet was annealed in a reducing atmosphere, the annealing conditions were set to a soaking temperature of 800°C and a soaking time of 10 seconds. The annealing atmosphere was a reducing atmosphere including a mixed gas of 5% of hydrogen and a remainder of nitrogen. The oxygen concentration in the annealing atmosphere was set to 20 ppm or less. Then, the steel sheet after the annealing was aircooled with nitrogen gas until the immersed sheet temperature reached the bath temperature + 20°C, and then were immersed in a hot-dip plating bath for about 3 seconds and pulled up. The pulling-up speed was set to 20 to 200 mm/sec. During the pulling-up, the plating adhesion amount was controlled by $N_2$ wiping gas.

The chemical compositions of the plating layers were as shown in Tables 1A and 1B. Manufacturing conditions were set as shown in Tables 2A and 2B. In addition, the forms of the binary eutectic structures or the ternary eutectic structures in the plating layer were evaluated, and the results are shown in Tables 3A and 3B. Moreover, the coating adhesion and the end surface corrosion resistance of the plated steel sheets were evaluated, and the results thereof are shown in Tables 3A and 3B.

The chemical composition of the plating layer, the microstructure of the plating layer, and the evaluation of the uneven shape of the surface of the plating layer were evaluated by the above-described methods. The evaluation of the uneven shape of the surface of the plating layer was performed by setting an observed visual field in which the length Lo of the plating layer in the longitudinal direction was in a range of 500 $\mu$m. In addition, the presence or absence of the $Mg_2Sn$ phase was determined by performing X-ray diffraction measurement on the surface of the plating layer and determining whether or not the diffraction peak of $Mg_2Sn$ was checked.

For the end surface corrosion resistance (simulated end surface corrosion resistance), plated steel sheets were cut in an arbitrary position to expose cut end surfaces, the cut end surfaces were subjected to a neutral salt spray test as specified in JIS Z 2371, and an evaluation was made based on the occurrence situation of red rust on the cut end surface portions. Hereinafter, evaluation criteria for the red rust area ratio will be shown. "AAA", "AA", and "A" were regarded as passes. The results are shown in Tables 3A and 3B.

(Evaluation)

    AAA: red rust area ratio of 10% or less at 2500 h
    AA: red rust area ratio of 10% or less at 2,000 h
    A: red rust area ratio of 20% or less at 1,500 h
    B: more than 20% of red rust area ratio at 1,500 h

For the coating adhesion (adhesion strength), a 50 x 100 mm samples were taken from plated steel sheets, and the samples were subjected to a Zn phosphate treatment (SD5350 system: the standards made by Nippon Paint Industrial Coatings Co., Ltd.), and then subjected to electrodeposition coating (PN110 Powernics (registered trade mark) Gray: the standards made by Nippon Paint Industrial Coatings Co.) with thickness of 20 $\mu$m and baked at a baking temperature of 150°C for 20 minutes. The steel sheets were then subjected to V-bending using a 60° die with a radius of curvature of 10 mm, subjected to bending back, further immersed in a 5% NaAl solution at 50°C for 1000 hours, and subjected to tape peeling test in which adhesive tape was applied only to the V-bent surface and instantly pulled off, the ratio of the area where the paint peeled off to the area where the adhesive tape was applied, and evaluation was performed as follows. "AAA", "AA", and "A" were regarded as passes. The results are shown in Tables 3A and 3B.

(Evaluation)

AAA: ratio of peeled area ratio of less than 13%
AA: ratio of peeled area ratio of 13% or more and less than 25%
A: ratio of peeled area ratio of 25% or more and less than 35%
B: ratio of peeled area ratio of 35% or more

In the plated steel sheets of Nos. 1 to 31, the surface of the plating layer was an uneven surface, one or both of a plurality of the blocky binary eutectic structures and a plurality of the blocky ternary eutectic structures were present in the plating layer, some of the eutectic structures continuously present from the surface of the plating layer to the depth of 1/2 of the thickness of the plating layer or the Fe-Al-based interface alloy layer were located in the recessed parts of the uneven surface, the chemical composition of the plating layer and the form of the eutectic structures were within the ranges of the present disclosure, and both the end surface corrosion resistance and the coating adhesion were excellent.

In No. 32, the amount of Al in the plating layer was insufficient. Therefore, in No. 32, $(Lr - Lo)/Lo \times 100$ was small and the coating adhesion was insufficient.

In No. 33, the amount of Al in the plating layer was excessive. Therefore, in No. 33, $(Lr - Lo)/Lo \times 100$ was small and the coating adhesion was insufficient.

In No. 34, the amount of Mg in the plating layer was insufficient. Therefore, in No. 34, $(Lr - Lo)/Lo \times 100$ was small and the coating adhesion was insufficient. Moreover, the end surface corrosion resistance decreased.

In No. 35, the amount of Mg in the plating layer was excessive. Therefore, in No. 35, $(Lr - Lo)/Lo \times 100$ was small and the coating adhesion was insufficient.

In No. 36, the oxygen concentration in the atmosphere from the plating bath to the end of the cooling step exceeded 5,000 ppm. Therefore, in No. 36, $(Lr - Lo)/Lo \times 100$ was small and the coating adhesion was insufficient.

In No. 37, the average cooling rate from the bath temperature of the plating bath to 260°C was low. Therefore, in No. 37, the Al primary phase (Al phase or Al-Zn phase) was not sufficiently crystallized, $(Lr - Lo)/Lo \times 100$ was small, and the coating adhesion was insufficient.

[Table 1A]

| | No. | Chemical composition of plating layer (mass %) Remainder: impurities | | | | | | | | | | | Adhesion amount of plating layer per one surface (g/m²) |
| | | Zn | Al | Mg | Zn+ Mg+ Al | Sn | Si | Ca | Ni | Fe | Other elements | | |
| | | | | | | | | | | | Type | Total (%) | |
| Example | 1 | 86.95 | 10.00 | 3.00 | 99.95 | 0.00 | 0.00 | 0.00 | 0.00 | 0.05 | - | 0.00 | 45 |
| Example | 2 | 85.70 | 11.00 | 3.00 | 99.70 | 0.06 | 0.10 | 0.00 | 0.00 | 0.05 | Bi | 0.01 | 50 |
| Example | 3 | 85.80 | 11.00 | 3.00 | 99.80 | 0.00 | 0.00 | 0.00 | 0.00 | 0.05 | La:0.02, Ce:0.05 | 0.07 | 45 |
| Example | 4 | 85.70 | 11.00 | 3.00 | 99.70 | 0.00 | 0.10 | 0.04 | 0.00 | 0.05 | V | 0.01 | 50 |
| Example | 5 | 85.10 | 10.00 | 4.50 | 99.60 | 0.06 | 0.20 | 0.00 | 0.00 | 0.08 | - | 0.00 | 50 |
| Example | 6 | 82.70 | 12.00 | 5.00 | 99.70 | 0.06 | 0.10 | 0.00 | 0.00 | 0.08 | Pb | 0.03 | 50 |
| Example | 7 | 81.00 | 12.00 | 6.00 | 99.00 | 0.00 | 0.20 | 0.00 | 0.00 | 0.10 | Zr | 0.01 | 50 |
| Example | 8 | 81.60 | 12.00 | 6.00 | 99.60 | 0.06 | 0.20 | 0.00 | 0.00 | 0.08 | Co | 0.01 | 45 |
| Example | 9 | 81.60 | 13.00 | 5.00 | 99.60 | 0.06 | 0.20 | 0.00 | 0.00 | 0.10 | - | 0.00 | 45 |
| Example | 10 | 81.50 | 13.00 | 5.00 | 99.50 | 0.06 | 0.20 | 0.00 | 0.00 | 0.10 | La:0.02, Ce:0.05 | 0.07 | 45 |
| Example | 11 | 79.50 | 15.00 | 5.00 | 99.50 | 0.06 | 0.20 | 0.00 | 0.00 | 0.20 | Ag | 0.01 | 50 |
| Example | 12 | 77.50 | 17.00 | 5.00 | 99.50 | 0.01 | 0.20 | 0.04 | 0.00 | 0.20 | Li | 0.01 | 50 |
| Example | 13 | 75.00 | 18.00 | 6.00 | 99.00 | 0.00 | 0.40 | 0.04 | 0.00 | 0.20 | Sb | 0.08 | 50 |

| | No. | Chemical composition of plating layer (mass %) Remainder: impurities | | | | | | | | | | | Adhesion amount of plating layer per one surface (g/m²) |
|---|---|---|---|---|---|---|---|---|---|---|---|---|---|
| | | Zn | Al | Mg | Zn+ Mg+ Al | Sn | Si | Ca | Ni | Fe | Other elements | | |
| | | | | | | | | | | | Type | Total (%) | |
| Example | 14 | 74.30 | 19.00 | 6.00 | 99.30 | 0.20 | 0.30 | 0.04 | 0.00 | 0.10 | P | 0.01 | 50 |
| Example | 15 | 74.60 | 19.00 | 6.00 | 99.60 | 0.01 | 0.20 | 0.04 | 0.00 | 0.10 | In | 0.02 | 50 |
| Example | 16 | 74.50 | 19.00 | 6.00 | 99.50 | 0.01 | 0.20 | 0.04 | 0.00 | 0.10 | La:0.02, Ce:0.05 | 0.07 | 50 |
| Example | 17 | 73.40 | 19.00 | 7.00 | 99.40 | 0.01 | 0.20 | 0.04 | 0.00 | 0.30 | Mn | 0.01 | 45 |
| Example | 18 | 64.50 | 20.00 | 15.00 | 99.50 | 0.01 | 0.30 | 0.05 | 0.00 | 0.10 | B | 0.01 | 66 |
| Example | 19 | 73.70 | 20.00 | 6.00 | 99.70 | 0.01 | 0.10 | 0.04 | 0.00 | 0.10 | Mo | 0.03 | 50 |
| Example | 20 | 71.40 | 22.00 | 6.00 | 99.40 | 0.01 | 0.40 | 0.04 | 0.00 | 0.10 | La | 0.01 | 50 |

The underlined portions indicate that they are outside the scope of present disclosure.

[Table 1B]

| | No. | Chemical composition of plating layer (mass %) Remainder: impurities | | | | | | | | | | | Adhesion amount of plating layer per one surface (g/m²) |
|---|---|---|---|---|---|---|---|---|---|---|---|---|---|
| | | Zn | Al | Mg | Zn+ Mg+ Al | Sn | Si | Ca | Ni | Fe | Other elements | | |
| | | | | | | | | | | | Type | Total (%) | |
| Example | 21 | 69.00 | 22.00 | 8.00 | 99.00 | 0.01 | 0.70 | 0.04 | 0.00 | 0.20 | Ce | 0.01 | 89 |
| Example | 22 | 72.60 | 22.00 | 5.00 | 99.60 | 0.00 | 0.10 | 0.01 | 0.00 | 0.20 | Nb | 0.02 | 50 |
| Example | 23 | 70.60 | 24.00 | 5.00 | 99.60 | 0.00 | 0.10 | 0.00 | 0.00 | 0.30 | - | 0.00 | 120 |
| Example | 24 | 71.40 | 22.00 | 6.00 | 99.40 | 0.00 | 0.10 | 0.01 | 0.01 | 0.40 | Ti | 0.01 | 50 |
| Example | 25 | 67.60 | 23.00 | 8.00 | 98.60 | 0.01 | 0.70 | 0.04 | 0.00 | 0.60 | - | 0.00 | 200 |
| Example | 26 | 67.80 | 23.00 | 8.00 | 98.80 | 0.01 | 0.50 | 0.04 | 0.00 | 0.60 | Y | 0.01 | 50 |
| Example | 27 | 64.70 | 25.00 | 8.00 | 97.70 | 0.01 | 1.10 | 0.04 | 0.00 | 1.00 | Cu | 0.10 | 80 |
| Example | 28 | 66.00 | 24.00 | 7.00 | 97.00 | 0.01 | 1.50 | 0.04 | 0.00 | 1.40 | W | 0.01 | 75 |
| Example | 29 | 63.60 | 25.00 | 8.00 | 96.60 | 0.02 | 2.00 | 0.04 | 0.00 | 1.30 | Sr | 0.02 | 66 |
| Example | 30 | 48.90 | 28.00 | 8.00 | 84.90 | 0.02 | 0.00 | 0.04 | 0.00 | 15.00 | Cr | 0.03 | 50 |
| Example | 31 | 58.80 | 30.00 | 9.00 | 97.80 | 0.01 | 0.80 | 0.04 | 0.00 | 1.30 | - | 0.00 | 54 |
| Comparative Example | 32 | 86.80 | <u>9.00</u> | 4.00 | 99.80 | 0.00 | 0.00 | 0.00 | 0.00 | 0.10 | - | 0.00 | 50 |
| Comparative Example | 33 | 64.80 | <u>31.00</u> | 4.00 | 99.80 | 0.00 | 0.10 | 0.00 | 0.00 | 0.10 | - | 0.00 | 50 |
| Comparative Example | 34 | 79.80 | 19.00 | <u>0.80</u> | 99.60 | 0.00 | 0.20 | 0.01 | 0.00 | 0.10 | - | 0.00 | 50 |
| Comparative Example | 35 | 65.30 | 19.00 | <u>15.50</u> | 99.80 | 0.00 | 0.00 | 0.05 | 0.00 | 0.10 | - | 0.00 | 50 |
| Comparative Example | 36 | 81.10 | 15.00 | 3.00 | 99.10 | 0.00 | 0.00 | 0.01 | 0.00 | 0.80 | - | 0.00 | 50 |

(continued)

| | No. | Chemical composition of plating layer (mass %) Remainder: impurities | | | | | | | | | | | Adhesion amount of plating layer per one surface (g/m$^2$) |
|---|---|---|---|---|---|---|---|---|---|---|---|---|---|
| | | Zn | Al | Mg | Zn+ Mg+ Al | Sn | Si | Ca | Ni | Fe | Other elements | | |
| | | | | | | | | | | | Type | Total (%) | |
| Comparative Example | 37 | 81.10 | 15.00 | 3.00 | 99.10 | 0.00 | 0.00 | 0.01 | 0.00 | 0.80 | - | 0.00 | 50 |
| Comparative Example | 38 | 81.10 | 15.00 | 3.00 | 99.10 | 0.00 | 0.00 | 0.01 | 0.00 | 0.80 | - | 0.00 | 50 |

The underlined portions indicate that they are outside the scope of present disclosure.

[Table 2A]

| Category | No. | Manufacturing conditions | | | | |
|---|---|---|---|---|---|---|
| | | Bath temperature (°C) | Bath surface oxygen concentration (ppm) | Cooling rate of bath temperature to 260°C (°C/s) | Cooling gas dew point of bath temperature to 260°C (°C) | Cooling gas oxygen concentration of bath temperature to 260°C (ppm) |
| Example | 1 | 460 | 5000 | 15 | 0 | 5000 |
| Example | 2 | 480 | 2000 | 15 | 0 | 100 |
| Example | 3 | 460 | 5000 | 15 | 0 | 100 |
| Example | 4 | 500 | 1000 | 15 | 0 | 100 |
| Example | 5 | 500 | 700 | 15 | 0 | 100 |
| Example | 6 | 530 | 100 | 15 | 0 | 100 |
| Example | 7 | 530 | 100 | 15 | 0 | 100 |
| Example | 8 | 530 | 100 | 15 | 0 | 100 |
| Example | 9 | 530 | 100 | 15 | 0 | 100 |
| Example | 10 | 530 | 100 | 15 | 0 | 100 |
| Example | 11 | 530 | 100 | 15 | 0 | 100 |
| Example | 12 | 530 | 100 | 15 | 0 | 100 |
| Example | 13 | 530 | 100 | 15 | 0 | 100 |
| Example | 14 | 530 | 100 | 15 | 0 | 100 |
| Example | 15 | 530 | 100 | 15 | 0 | 100 |
| Example | 16 | 530 | 100 | 15 | 0 | 100 |
| Example | 17 | 530 | 100 | 15 | 0 | 100 |
| Example | 18 | 590 | 100 | 15 | 0 | 100 |
| Example | 19 | 540 | 100 | 15 | 0 | 100 |
| Example | 20 | 540 | 100 | 15 | 0 | 100 |

The underlined portions indicate that they are outside the scope of preferable manufacturing conditions.

[Table 2B]

| Category | No. | Manufacturing conditions | | | | |
|---|---|---|---|---|---|---|
| | | Bath temperature (°C) | Bath surface oxygen concentration (ppm) | Cooling rate of bath temperature to 260°C (°C/s) | Cooling gas dew point of bath temperature to 260°C (°C) | Cooling gas oxygen concentration of bath temperature to 260°C (ppm) |
| Example | 21 | 540 | 100 | 15 | 0 | 100 |
| Example | 22 | 540 | 100 | 15 | 0 | 100 |
| Example | 23 | 560 | 100 | 15 | 0 | 100 |
| Example | 24 | 540 | 100 | 15 | 0 | 100 |
| Example | 25 | 550 | 2000 | 15 | 0 | 100 |
| Example | 26 | 550 | 100 | 15 | 0 | 100 |
| Example | 27 | 550 | 2000 | 15 | 0 | 100 |
| Example | 28 | 550 | 2000 | 15 | 0 | 100 |
| Example | 29 | 550 | 2000 | 15 | 0 | 100 |
| Example | 30 | 550 | 2000 | 15 | 0 | 100 |
| Example | 31 | 550 | 2000 | 15 | 0 | 100 |
| Comparative Example | 32 | 450 | 2000 | 15 | 0 | 100 |
| Comparative Example | 33 | 600 | 2000 | 15 | 0 | 100 |
| Comparative Example | 34 | 540 | 2000 | 15 | 0 | 100 |
| Comparative Example | 35 | 540 | 2000 | 15 | 0 | 100 |
| Comparative Example | 36 | 520 | <u>6000</u> | 15 | 0 | 100 |
| Comparative Example | 37 | 520 | 2000 | <u>13</u> | 0 | 100 |
| Comparative Example | 38 | 520 | 2000 | 15 | 0 | <u>6000</u> |
| The underlined portions indicate that they are outside the scope of preferable manufacturing conditions. | | | | | | |

[Table 3A]

| Category | No. | Plating layer | | | | | Performance | |
|---|---|---|---|---|---|---|---|---|
| | | Eutectic structure distribution | | | Surface uneven shape | Mg$_2$Sn phase | | |
| | | Presence or absence of eutectic structure continuous from surface to position at 1/2 of plating layer thickness | Number of points continuous from surface to position at 1/2 of plating layer thickness | Number of points continuous from surface to Fe-Al-based interface alloy layer | (Lr - Lo)/Lo × 100 (%) | Presence or absence | Adhesion strength | Simulated end surface corrosion resistance |
| Example | 1 | Yes | 1 | 0 | 2.0 | No | A | A |
| Example | 2 | Yes | 2 | 0 | 4.7 | Yes | A | AA |
| Example | 3 | Yes | 1 | 1 | 2.0 | No | AA | A |
| Example | 4 | Yes | 3 | 2 | 6.0 | No | AA | AA |
| Example | 5 | Yes | 3 | 2 | 6.3 | Yes | AA | AAA |
| Example | 6 | Yes | 4 | 3 | 6.7 | Yes | AA | AAA |
| Example | 7 | Yes | 4 | 2 | 6.8 | No | AAA | AA |
| Example | 8 | Yes | 5 | 3 | 7.1 | Yes | AAA | AAA |
| Example | 9 | Yes | 4 | 4 | 7.8 | Yes | AAA | AAA |
| Example | 10 | Yes | 4 | 3 | 7.8 | Yes | AAA | AAA |
| Example | 11 | Yes | 6 | 5 | 8.0 | Yes | AAA | AAA |
| Example | 12 | Yes | 8 | 4 | 8.6 | Yes | AAA | AAA |
| Example | 13 | Yes | 10 | 5 | 8.2 | No | AA | AA |
| Example | 14 | Yes | 12 | 8 | 8.9 | Yes | AA | AAA |
| Example | 15 | Yes | 14 | 9 | 8.3 | Yes | AAA | AAA |
| Example | 16 | Yes | 14 | 8 | 8.3 | Yes | AAA | AAA |
| Example | 17 | Yes | 15 | 9 | 8.9 | Yes | AAA | AAA |
| Example | 18 | Yes | 13 | 20 | 9.4 | Yes | AAA | AAA |
| Example | 19 | Yes | 11 | 10 | 10.4 | Yes | AAA | AAA |
| Example | 20 | Yes | 10 | 8 | 9.7 | Yes | AAA | AAA |
| The underlined portions indicate that they are outside the scope of present disclosure. | | | | | | | | |

[Table 3B]

| Category | No. | Plating layer | | | | | Performance | |
| --- | --- | --- | --- | --- | --- | --- | --- | --- |
| | | Eutectic structure distribution | | | Surface uneven shape | Mg$_2$Sn phase | | |
| | | Presence or absence of eutectic structure continuous from surface to position at 1/2 of plating layer thickness | Number of points continuous from surface to position at 1/2 of plating layer thickness | Number of points continuous from surface to Fe-Al-based interface alloy layer | (Lr - Lo)/Lo × 100 (%) | Presence or absence | Adhesion strength | Simulated end surface corrosion resistance |
| Example | 21 | Yes | 8 | 6 | 9.5 | Yes | AAA | AAA |
| Example | 22 | Yes | 8 | 6 | 8.9 | No | AAA | AA |
| Example | 23 | Yes | 7 | 5 | 9.9 | No | AAA | AA |
| Example | 24 | Yes | 6 | 6 | 9.1 | No | AAA | AA |
| Example | 25 | Yes | 5 | 3 | 6.0 | Yes | AA | AAA |
| Example | 26 | Yes | 5 | 2 | 8.0 | Yes | AAA | AAA |
| Example | 27 | Yes | 4 | 3 | 5.5 | Yes | AA | AAA |
| Example | 28 | Yes | 4 | 2 | 4.5 | Yes | AA | AAA |
| Example | 29 | Yes | 3 | 2 | 4.3 | Yes | AA | AAA |
| Example | 30 | Yes | 2 | 1 | 4.5 | Yes | AA | AAA |
| Example | 31 | Yes | 2 | 0 | 2.5 | Yes | A | AAA |
| Comparative Example | 32 | No | 0 | 0 | 0.3 | No | B | A |
| Comparative Example | 33 | No | 0 | 0 | 0.8 | No | B | A |
| Comparative Example | 34 | No | 0 | 0 | 1.5 | No | B | B |
| Comparative Example | 35 | No | 0 | 0 | 1.1 | No | B | AA |
| Comparative Example | 36 | No | <u>0</u> | 0 | 0.5 | No | B | A |
| Comparative Example | 37 | No | 0 | 0 | 0.3 | No | B | A |
| Comparative Example | 38 | No | 0 | 0 | 0.7 | No | B | A |
| The underlined portions indicate that they are outside the scope of present disclosure. | | | | | | | | |

REFERENCE SIGNS LIST

1 Plated steel sheet
11 Steel sheet
12, 112 Plating layer
13, 113 Interface alloy layer
14, 114 Binary eutectic structure or ternary eutectic structure

**Claims**

1. A plated steel sheet, comprising: a steel sheet; and a plating layer disposed on at least part of a surface of the steel sheet, wherein

   an average chemical composition of the plating layer contains, by mass%,
   Al: 10.00% to 30.00%,
   Mg: 1.00% to 15.00%,
   Sn: 0.00% to 1.00%,
   Si: 0.00% to 2.00%,
   Ca: 0.00% to 2.00%,
   Ni: 0.00% to 1.00%,
   Fe: 0.01% to 15.00%,
   Sb: 0.00% to 0.50%,
   Pb: 0.00% to 0.50%,
   Cu: 0.00% to 1.00%,
   Ti: 0.00% to 1.00%,
   Cr: 0.00% to 1.00%,
   Nb: 0.00% to 1.00%,
   Zr: 0.00% to 1.00%,
   Mn: 0.00% to 1.00%,
   Mo: 0.00% to 1.00%,
   Ag: 0.00% to 1.00%,
   Li: 0.00% to 1.00%,
   Bi: 0.00% to 1.00%,
   V: 0.00% to 1.00%,
   Co: 0.00% to 1.00%,
   In: 0.00% to 1.00%,
   W: 0.00% to 1.00%,
   P: 0.00% to 1.00%,
   La: 0.00% to 0.50%,
   Ce: 0.00% to 0.50%,
   B: 0.00% to 0.50%,
   Y: 0.00% to 0.50%,
   Sr: 0.00% to 0.50%,
   a total of Sb, Pb, Cu, Ti, Cr, Nb, Zr, Mn, Mo, Ag, Li, Bi, V, Co, P, In, W, La, Ce, B, Y, and Sr: 0.00% to 5.00%, and
   a remainder: including Zn and impurities,
   a surface of the plating layer is an uneven surface,
   in a cross section of the plating layer, a relationship between a length Lo of the plating layer in a longitudinal direction in an observation region of the cross section and a total length Lr of a contour line of the surface of the plating layer in the observation region satisfies the following expression (1),
   the plating layer includes one or both of a plurality of blocky binary eutectic structures or a plurality of blocky ternary eutectic structures, and
   at least some of the plurality of blocky binary eutectic structures or the plurality of blocky ternary eutectic structures are continuously present from the surface of the plating layer to a position at 1/2 of an average thickness of the plating layer.

$$(Lr - Lo)/Lo \times 100 \geq 2.0(\%) \qquad (1)$$

2. The plated steel sheet according to Claim 1,

wherein the plating layer contains an Fe-Al-based interface alloy layer which is in contact with the steel sheet, and at least some of the plurality of blocky binary eutectic structures or the plurality of blocky ternary eutectic structures are continuously present from the surface of the plating layer to the Fe-Al-based interface alloy layer.

3. The plated steel sheet according to Claim 1, wherein the number of points where at least some of the plurality of blocky binary eutectic structures or the plurality of blocky ternary eutectic structures are continuously present from the surface of the plating layer to a position at 1/2 of an average thickness of the plating layer is 1 to 15 per rectangular region having a long side of 500 $\mu$m and a short side of 150 $\mu$m on the surface of the plating layer.

4. The plated steel sheet according to Claim 1,

   wherein, instead of the expression (1), the following expression (2) is satisfied,
   the number of points where at least some of the plurality of blocky binary eutectic structures or the plurality of blocky ternary eutectic structures are continuously present from the surface of the plating layer to a position at 1/2 of an average thickness of the plating layer is 3 to 15 per rectangular region having a long side of 500 $\mu$m and a short side of 150 $\mu$m on the surface of the plating layer.

$$(Lr - Lo)/Lo \times 100 \geq 6.0(\%) \qquad (2)$$

5. The plated steel sheet according to Claim 1,

   wherein, instead of the expression (1), the following expression (3) is satisfied,
   the number of points where at least some of the plurality of blocky binary eutectic structures or the plurality of blocky ternary eutectic structures are continuously present from the surface of the plating layer to a position at 1/2 of an average thickness of the plating layer is 5 to 15 per rectangular region having a long side of 500 $\mu$m and a short side of 150 $\mu$m on the surface of the plating layer.

$$(Lr - Lo)/Lo \times 100 \geq 8.0(\%) \qquad (3)$$

6. The plated steel sheet according to any one of Claims 1, 3, 4, and 5,
   wherein points where at least some of the plurality of blocky binary eutectic structures or the plurality of blocky ternary eutectic structures are continuously present from the surface of the plating layer to a position at 1/2 of an average thickness of the plating layer are present in recessed parts of the uneven surface of the plating layer.

7. The plated steel sheet according to Claim 2,
   wherein points where at least some of the plurality of blocky binary eutectic structures or the plurality of blocky ternary eutectic structures are continuously present from the surface of the plating layer to the Fe-Al-based interface alloy layer are present in recessed parts of the uneven surface of the plating layer.

8. The plated steel sheet according to Claim 1, wherein in the average chemical composition of the plating layer, Al and Mg are Al: 10.00% to 25.00% and Mg: 4.50% to 15.00%.

9. The plated steel sheet according to Claim 1, wherein in the average chemical composition of the plating layer, Al and Mg are Al: 15.00% to 22.00% and Mg: 5.00% to 15.00%.

10. The plated steel sheet according to Claim 1, 8, or 9,

    wherein in the average chemical composition of the plating layer, Sn is 0.05% to 0.50%, and
    an $Mg_2Sn$ phase detected by X-ray diffraction measurement is in the plating layer.

11. The plated steel sheet according to Claim 1, 8, or 9,

    wherein in the average chemical composition of the plating layer, one or both of La and Ce are contained, and
    a total amount of La and Ce is 0.05% to 0.50%.

12. The adhesively joined structure according to Claim 10,
    wherein in the average chemical composition of the plating layer, one or both of La and Ce are contained, and a total amount of La and Ce is 0.05% to 0.50%.

13. A member for a vehicle, comprising: a steel; a plating layer disposed on at least part of a surface of the steel; and a coating film disposed on a surface of the plating layer, wherein

an average chemical composition of the plating layer contains, by mass%,
Al: 10.00% to 30.00%,
Mg: 1.00% to 15.00%,
Sn: 0.00% to 1.00%,
Si: 0.00% to 2.00%,
Ca: 0.00% to 2.00%,
Ni: 0.00% to 1.00%,
Fe: 0.01% to 15.00%,
Sb: 0.00% to 0.50%,
Pb: 0.00% to 0.50%,
Cu: 0.00% to 1.00%,
Ti: 0.00% to 1.00%,
Cr: 0.00% to 1.00%,
Nb: 0.00% to 1.00%,
Zr: 0.00% to 1.00%,
Mn: 0.00% to 1.00%,
Mo: 0.00% to 1.00%,
Ag: 0.00% to 1.00%,
Li: 0.00% to 1.00%,
Bi: 0.00% to 1.00%,
V: 0.00% to 1.00%,
Co: 0.00% to 1.00%,
In: 0.00% to 1.00%,
W: 0.00% to 1.00%,
P: 0.00% to 1.00%,
La: 0.00% to 0.50%,
Ce: 0.00% to 0.50%,
B: 0.00% to 0.50%,
Y: 0.00% to 0.50%,
Sr: 0.00% to 0.50%,
a total of Sb, Pb, Cu, Ti, Cr, Nb, Zr, Mn, Mo, Ag, Li, Bi, V, Co, P, In, W, La, Ce, B, Y, and Sr: 0.00% to 5.00%, and
a remainder: including Zn and impurities,
a surface of the plating layer is an uneven surface,
in a cross section of the plating layer, a relationship between a length Lo of the plating layer in a longitudinal direction in an observation region of the cross section and a total length Lr of a contour line of the surface of the plating layer in the observation region satisfies the following expression (4),
the plating layer includes one or both of a plurality of blocky binary eutectic structures or a plurality of blocky ternary eutectic structures, and
at least some of the plurality of blocky binary eutectic structures or the plurality of blocky ternary eutectic structures are continuously present from the surface of the plating layer to a position at 1/2 of an average thickness of the plating layer.

$$(Lr - Lo)/Lo \times 100 \geq 2.0(\%) \qquad (4)$$

# FIG. 1

# FIG. 2

# FIG. 3

FIG. 4

114    114    11    112    114    113    114

FIG. 5

STEEL SHEET

ANNEALING    S1

IMMERSING    S2

PULLING-UP    S3

SPRAYING    S4

PLATED STEEL SHEET

## INTERNATIONAL SEARCH REPORT

| International application No. |
| --- |
| **PCT/JP2024/018655** |

**A. CLASSIFICATION OF SUBJECT MATTER**

*C23C 2/06*(2006.01)i; *C22C 18/04*(2006.01)i; *C22C 38/00*(2006.01)i; *C22C 38/04*(2006.01)i
FI: C23C2/06; C22C18/04; C22C38/00 301T; C22C38/04

According to International Patent Classification (IPC) or to both national classification and IPC

**B. FIELDS SEARCHED**

Minimum documentation searched (classification system followed by classification symbols)

C23C2/06; C22C18/04; C22C38/00; C22C38/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2011-157579 A (NISSHIN STEEL CO., LTD.) 18 August 2011 (2011-08-18) paragraphs [0015]-[0023], [0055]-[0069] | 1-13 |
| Y | WO 2022/107837 A1 (NIPPON STEEL CORPORATION) 27 May 2022 (2022-05-27) paragraphs [0102]-[0136], fig. 1-3 | 1-8, 10-13 |
| Y | WO 2013/002358 A1 (NIPPON STEEL & SUMITOMO METAL CORPORATION) 03 January 2013 (2013-01-03) paragraphs [0023]-[0028], [0049]-[0059], fig. 1 | 1, 3-13 |
| Y | JP 2018-188704 A (JFE STEEL CORPORATION) 29 November 2018 (2018-11-29) paragraphs [0026]-[0046], fig. 1 | 6, 7 |
| A | WO 2018/139619 A1 (NIPPON STEEL & SUMITOMO METAL CORPORATION) 02 August 2018 (2018-08-02) paragraphs [0197]-[0252], fig. 1-14 | 1-13 |

☐ Further documents are listed in the continuation of Box C.    ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **01 August 2024** | **13 August 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

# EP 4 722 405 A1

International application No.

**PCT/JP2024/018655**

| Patent document cited in search report | | | Publication date (day/month/year) | Patent family member(s) | | | Publication date (day/month/year) |
|---|---|---|---|---|---|---|---|
| JP | 2011-157579 | A | 18 August 2011 | (Family: none) | | | |
| WO | 2022/107837 | A1 | 27 May 2022 | US | 2023/0304136 | A1 | |
| | | | | paragraphs [0170]-[0210], fig. 1-3 | | | |
| | | | | EP | 4223897 | A1 | |
| | | | | KR | 10-2023-0070071 | A | |
| | | | | CN | 116457483 | A | |
| | | | | CA | 3195998 | A | |
| | | | | AU | 2021381168 | A | |
| | | | | MX | 2023005482 | A | |
| | | | | TW | 202225424 | A | |
| | | | | CL | 2023001380 | A | |
| WO | 2013/002358 | A1 | 03 January 2013 | US | 2014/0127531 | A1 | |
| | | | | paragraphs [0045]-[0051], [0769]-[0084], fig. 1 | | | |
| | | | | CA | 2838318 | A | |
| | | | | KR | 10-2014-0007964 | A | |
| | | | | CN | 103620079 | A | |
| | | | | MX | 2013015130 | A | |
| | | | | AU | 2012276644 | B | |
| JP | 2018-188704 | A | 29 November 2018 | (Family: none) | | | |
| WO | 2018/139619 | A1 | 02 August 2018 | US | 2019/0390303 | A1 | |
| | | | | paragraphs [4057]-[0532], fig. 1-14 | | | |
| | | | | EP | 3575433 | A1 | |
| | | | | AU | 2018211810 | A | |
| | | | | SG | 11201906850R | A | |
| | | | | KR | 10-2019-0099064 | A | |
| | | | | CN | 110268087 | A | |
| | | | | MX | 2019008678 | A | |
| | | | | BR | 112019015377 | A | |
| | | | | NZ | 756405 | A | |
| | | | | TW | 201831708 | A | |
| | | | | PL | 3575433 | T | |
| | | | | ES | 2968918 | T | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023087179 A
- WO 2018139619 A
- WO 2018139620 A